(19) Europäisches Patentamt
European Patent Office
Office européen des brevets

(11) **EP 1 424 569 B1**

(12) **EUROPÄISCHE PATENTSCHRIFT**

(45) Veröffentlichungstag und Bekanntmachung des Hinweises auf die Patenterteilung:
**18.08.2010 Patentblatt 2010/33**

(51) Int Cl.:
*G01T 1/29* (2006.01)    *H04N 1/028* (2006.01)

(21) Anmeldenummer: 03102259.3

(22) Anmeldetag: **24.11.1998**

(54) **Vorrichtung zum Auslesen von einer in einem Phosphorträger abgespeicherten Information und Röntgenkassette**

Device for reading out information stored in a phosphor-carrier, and an x-ray cassette

Dispositif pour la lecture d'une information stockée dans un support au phosphore, et coffret de radiographie

(84) Benannte Vertragsstaaten:
**AT BE CH CY DE DK ES FI FR GB GR IE IT LI LU MC NL PT SE**

(30) Priorität: **28.11.1997 DE 19752925**

(43) Veröffentlichungstag der Anmeldung:
**02.06.2004 Patentblatt 2004/23**

(62) Dokumentnummer(n) der früheren Anmeldung(en) nach Art. 76 EPÜ:
**98963507.3 / 1 034 443**

(73) Patentinhaber: **Agfa-Gevaert HealthCare GmbH 50670 Köln (DE)**

(72) Erfinder:
• **Müller, Jürgen**
  **81545, München (DE)**
• **Gebele, Herbert**
  **82054, Sauerlach (DE)**
• **Zehetmaier, Thomas**
  **85646, Neufarn (DE)**
• **Thoma, Ralph**
  **86167, Augsburg (DE)**

(56) Entgegenhaltungen:
EP-A- 0 479 027    EP-A- 0 827 324
EP-A- 0 859 244    US-A- 4 748 326
US-A- 4 816 679    US-A- 5 162 919

**Beschreibung**

Die Erfindung betrifft eine Vorrichtung zum zeilenweisen Auslesen von einer in einem Phosphorträger abgespeicherten Information gemäß Anspruch 1. Die Erfindung betrifft ferner eine Röntgenkassette mit einer entsprechenden Vorrichtung.

Insbesondere für medizinische Zwecke wird von einem Objekt, beispielsweise einem Patienten, mittels einer Röntgenstrahlung ein Bild erzeugt, das in einem Phosphorträger als latentes Bild abgespeichert wird. Zum Auslesen des in dem Phosphorträger abgespeicherten Röntgenstrahlenbildes wird der Phosphorträger mittels einer Strahlungsquelle angeregt. Er emittiert aufgrund dieser Anregung Licht, das eine Intensität entsprechend des in dem Phosphorträger abgespeicherten Röntgenstrahlungsbildes aufweist. Das von dem Phosphorträger ausgesandte Licht wird von einem Detektionsmittel empfangen, so daß das in dem Phosphorträger abgespeicherte Röntgenstrahlungsbild anschließend sichtbar gemacht werden kann. Das Röntgenstrahlungsbild kann beispielsweise direkt auf einem Monitor dargestellt werden. Es ist aber auch möglich, das Röntgenstrahlungsbild auf einen speziell für Röntgenbilder hergestellten fotografischen Röntgenfilm zu schreiben.

Aus der europäischen Patentanmeldung EP 0 777 148 A1 ist eine Anordnung zum Auslesen von in einem Phosphorträger gespeicherten Informationen bekannt. Bei dieser bekannten Anordnung wird der Phosphorträger mit einem Laserstrahl angeregt. Der Laserstrahl eines einzigen Lasers wird dabei über einen sehr schnell drehenden Polygonspiegel und mehrere optische Linsen auf den Phosphorträger gerichtet. Die in der Patentanmeldung beschriebene Anordnung ist eine sogenannte "Flying Spot"-Vorrichtung, bei der der von dem Polygonspiegel reflektierte Laserstrahl alle Punkte einer Zeile des Phosphorträgers nacheinander anregt. Das aufgrund der Anregung mittels des Laserstrahls von dem Phosphorträger emittierte Licht wird von einem Faserquerschnittswandler zu einem fotoelektrischen Sensor geführt, der die aufgesammelten Photonen in elektrische Signale wandelt.

Mit dieser Anordnung wird nur jeweils ein einziger Punkt des Phosphorträgers zum Aussenden von Licht angeregt. Um die gesamte, in dem Phosphorträger abgespeicherte Information in einer vertretbaren, d.h. möglichst kurzen Zeit auslesen zu können, dürfen die einzelnen Punkte des Phosphorträgers nur kurzzeitig angeregt werden. Bei "Flying Spot"-Systemen beträgt eine typische Anregungszeit für einen Punkt etwa 6μs. Aufgrund dieser kurzen Anregungszeit muß die Intensität der von dem Laser erzeugten Laserstrahlung sehr groß sein, damit die einzelnen Punkte des Phosphorträgers eine genügend große Strahlung aussenden können. Des weiteren kann nur eine relativ geringe Menge abgespeicherter Information ausgelesen werden. Dadurch ist die erreichbare Qualität bei der Wiedergabe der abgespeicherten Information eingeschränkt.

Der den Phosphor anregende Laserstrahl muß gewissen Bedingungen bezüglich seiner räumlichen und spektralen Verteilung genügen. Um vor allem die gesamte Breite des Phosphorträgers anregen zu können, erfordern solche "Flying Spot"-Systeme eine Laserstrahlführung mit einer ca. 1,5- bis 2fachen Länge der Breite der anzuregenden Zeile des Phosphorträgers. Die Fokussierung und Führung des Laserstrahls erfordert ein sehr aufwendiges und damit kostenintensives System von optischen Komponenten. Diese optischen Komponenten benötigen des weiteren sehr viel Raum, so daß die Geräteabmessungen eines solchen "Flying Spot"-Systems sehr groß sind.

Aus US 4,816,679 ist eine gattungsgemäße Vorrichtung bekannt, bei welcher eine Stimulationsstrahlungsquelle eine Vielzahl von Punktlichtquellen umfasst, die nacheinander Stimulationsstrahlen auf die Phosphorschicht aussenden. Diese Vorrichtung erlaubt kein wesentlich einfacheres oder effektiveres Auslesen von Phosphorschichten als die oben genannten Flying Spot-Systeme.

In DE 195 06 809 A1 wird eine Vorrichtung beschrieben, bei welcher das von diskret verteilten LEDs einer LED-Zeile abgegebene Anregungslicht mittels Linsen-Abbildung auf die Speicherfolie abgebildet wird, welche darauf hin stimuliertes Licht abgibt. Das stimulierte Licht weist eine glockenförmige Intensitätsverteilung in einer senkrecht zur LED-Zeile verlaufenden Scanrichtung, in welcher die LED-Zeile bewegt wird, auf. Durch geeignete Wahl der Schritte der Scanbewegung der LED-Zeile in Scanrichtung wird erreicht, dass sich die Intensitätsverteilungen des in unterschiedlichen Scanpositionen jeweils stimulierten Lichts zu einem Bild überlagern.

Der vorliegenden Erfindung liegt die Aufgabe zugrunde, eine gute Qualität bei der Wiedergabe einer in einem Phosphorträger abgespeicherten Information zu gewährleisten.

Diese Aufgabe wird durch die technische Lehre des Anspruchs 1 oder des Anspruchs 17 gelöst.

Erfindungsgemäß können mittels der Strahlungsquelle mehrere Einzelstrahlen erzeugt werden, wodurch das gleichzeitige Anregen mehrerer Punkte des Phosphorträgers auf einfache und effektive Weise sehr genau durchgeführt werden kann. Außerdem kann die Strahlungsquelle mindestens ein erstes Strahlenfeld und mindestens ein zweites Strahlenfeld erzeugen, wobei sich das erste Strahlenfeld und das zweite Strahlenfeld in einem Überlagerungsfeld auf der Zeile überlagern. Auf diese Weise ist es möglich, die Funktionssicherheit der Strahlungsquelle zu erhöhen, da auch bei Ausfall einer der Laserdioden das Anregen aller Punkte der anzuregenden Zeile gewährleistet ist. Die Intensität der anregenden Strahlung wird bei Ausfall einer der Laserdioden in dem jeweiligen ausfallenden Bereich geringer, allerdings kann dieser Ausfall detektiert werden, so daß die Datenverarbeitungseinrichtung, die die Verarbeitung der digitalen Bilddaten nach dem Wandeln des von dem Empfangsmittel detektierten Lichts in elektrische Signale vornimmt, die durch den Ausfall fehlerhaften digitalen Bilddaten korrigieren kann.

Das Empfangsmittel ist so ausgestaltet, daß es eine Vielzahl von Punktelementen enthält und die von angeregten Punkten des Phosphorträgers ausgesandte zweite Strahlung punktweise gleichzeitig von mehreren dieser Punktelemente empfangen werden kann. Zum Anregen der einzelnen Punkte des Phosphorträgers, so daß diese die zweite Strahlung aussenden, ist eine vorgegebene Mindestenergie E notwendig. Diese ist abhängig von der Leistung (Intensität) der Strahlungsquelle und der Verweilzeit der von der Strahlungsquelle ausgesandten ersten Strahlung auf dem anzuregenden Punkt des Phosphorträgers. Werden mehrere Punkte des Phosphorträgers gleichzeitig angeregt, so ist es möglich, eine relativ lange Verweilzeit der ersten Strahlung je Punkt des Phosphorträgers zu erhalten, ohne die Gesamtdauer, die zum Auslesen der gesamten Information, die in dem Phosphorträger abgespeichert ist, zu verlängern. Vielmehr ist es vorteilhafterweise sogar möglich, diese Gesamtzeit zum Auslesen der gesamten in dem Phosphorträger abgespeicherten Information zu verkürzen. Aufgrund des langen Verweilens auf jeden Punkt der Phosphorplatte kann die Abtastgeschwindigkeit beim Anregen der Punkte der Phosphorplatte niedrig gehalten werden. Jeder Punkt sendet eine große zweite Strahlung aus, die von dem Empfangsmittel detektiert werden kann.

Es ist möglich, die von dem Phosphorträger ausgesandte zweite Strahlung über einen langen Zeitraum aufzuintegrieren. Da jedes Punktelement des Empfangsmittels ein gewisses Eigenrauschen aufweist, kann aufgrund der Erfindung vorteilhafterweise der Störabstand zum Eigenrauschen der Punktelemente vergrößert werden. Aufgrund der längeren Verweildauer der ersten Strahlung der Strahlungsquelle pro Punkt des Phosphorträgers ist es ebenso möglich, die von der Strahlungsquelle aufzubringende Leistung (Intensität) zu reduzieren und trotzdem die für das Anregen des Phosphorträgers erforderliche Energie E aufzubringen.

In einem Beispiel ist es möglich mehrere, insbesondere alle Punkte, die in einer Zeile des Phosphorträgers angeordnet sind, gleichzeitig anzuregen. Dadurch ist es möglich, eine große Anzahl von Punkten des Phosphorträgers gleichzeitig anzuregen und gleichzeitig dennoch die Aufwendungen für die Ausgestaltung der Strahlungsquelle und des Empfangsmittels vergleichsweise klein zu halten. Die notwendige Anzahl von Komponenten in der Strahlungsquelle und dem Empfangsmittel kann daher begrenzt bleiben. Dadurch kann eine hohe Kompaktheit der Anordnung gewährleistet werden.

Erfindungsgemäß weist die Strahlungsquelle mehrere Laserdioden auf, die für die Anregung der mehreren Punkte des Phosphorträgers verwendet werden. Mit Laserdioden lassen sich für die Anregung der Punkte des Phosphorträgers genügend hohe Strahlungsleistungen erzeugen. Gleichzeitig sind sie sehr kompakt, so daß ihre Verwendung für einen Aufbau der erfindungsgemäßen Vorrichtung mit geringen Abmaßen förderlich ist. Darüber hinaus können Laserdioden einfach angesteuert und geregelt werden.

In einem Beispiel ist die Anzahl der Laserdioden der Strahlungsquelle gleich der Anzahl der Punktelemente des Empfangsmittels. Jeder Punkt einer anzuregenden Zeile des Phosphorträgers wird in diesem Fall gleichzeitig angeregt. Die Strahlungsquelle ist dann als Laserdiodenzeile ausgestaltet. Dadurch ist es vorteilhafterweise möglich, auf weitere optische Mittel zur Aufweitung und Fokussierung der Laserdiodenstrahlen zu verzichten. Der Abstand zwischen der Strahlungsquelle und dem anzuregenden Phosphorträger kann gering gehalten werden. Dadurch wird weiterhin der Kompaktheitsgrad der Anordnung gefördert.

Um mehrere Punkte des Phosphorträgers mit einem einzigen Einzelstrahl anregen zu können, kann die Strahlungsquelle eine Optik enthalten, mit der der Einzelstrahl in Ausbreitungsrichtung einer Zeile des Phosphorträgers aufgeweitet werden kann. Dadurch ist es vorteilhafterweise ebenfalls möglich, mehrere Einzelstrahlen, insbesondere zwei Einzelstrahlen, zumindest teilweise auf dem jeweils anzuregenden Punkt des Phosphorträgers zu überlagern. Durch diese Überlagerung der Intensitäten mehrerer Einzelstrahlen kann die von der Strahlungsquelle zu erbringende Anregungsleistung verringert werden. Darüber hinaus wird ebenfalls die Auslesesicherheit für den Fall eines Ausfallens eines Einzelstrahles erhöht. Um die Einzelstrahlen trotz der Aufweitung in Ausbreitungsrichtung einer Zeile möglichst auf diese Zeile zu beschränken, ist die in der Strahlungsquelle vorgesehene Optik vorteilhafterweise so ausgestaltet, daß sie die Einzelstrahlen in einer Richtung senkrecht zu der Ausbreitungsrichtung der Zeile fokussiert. Dadurch wird gewährleistet, daß ein unerwünschtes Anregen von Zeilen, die der augenblicklich abzutastenden Zeile benachbart sind, vermieden wird.

Zwischen dem Phosphorträger und dem Empfangsmittel kann ein Abbildungsmittel vorgesehen sein, mit dem die von den einzelnen angeregten Punkten des Phosphorträgers ausgesandte zweite Strahlung auf den einzelnen Punktelementen des Empfangsmittels abgebildet werden kann. Diese Abbildung erfolgt vorteilhafterweise in einem 1 : 1-Maßstab. Dadurch kann auf die Verwendung eines Faserquerschnittswandlers verzichtet werden, der unvorteilhaft große Abmessungen besitzt. Der Abstand zwischen Phosphorträger und Empfangsmittel wird dadurch sehr gering, wodurch der Kompaktheitsgrad der Anordnung stark verbessert werden kann.

In einer weiteren besonders vorteilhaften Ausgestaltung der Erfindung sind zwei Strahlungsquellen vorgesehen, denen jeweils ein Empfangsmittel zugeordnet ist. Die beiden Strahlungsquellen und ihre zugehörigen Empfangsmittel sind dabei so angeordnet, daß der Phosphorträger, der als Phosphorplatte mit einer Oberseite und einer Unterseite ist, beidseitig auslesbar ist.

Dadurch kann die Menge der von dem Phosphorträger auszusendenden zweiten Strahlung weiter erhöht werden, wodurch sich die Qualität der Wiedergabe der aus der Phosphorplatte ausgelesenen Information verbessert.

Erfindungsgemäß wird eine Vorrichtung zum Auslesen von einer in einem Phosphorträger abgespeicherten Information direkt in einer Röntgenkassette angebracht, die einen solchen Phosphorträger aufweist. Eine in dem Phosphorträger abgespeicherte Röntgeninformation kann daher direkt von der erfindungsgemäßen Vorrichtung ausgelesen und einer Steuereinrichtung zur weiteren Verarbeitung zugeführt werden. Eine solche Röntgenkassette kann vorteilhafterweise fest in einem Röntgengerät integriert sein. Dadurch ist es für das Bedienpersonal vorteilhafterweise nicht mehr notwendig, zum Auslesen der in dem Phosphorträger abgespeicherten Information, die Röntgenkassette aus dem Röntgengerät herausnehmen zu müssen, um sie in ein spezielles Lesegerät zum Auslesen der abgespeicherten Information hineinzuschieben. Der Bedienkomfort wird dadurch stark verbessert.

In einer vorteilhaften Ausgestaltung der erfindungsgemäßen Röntgenkassette ist der Phosphorträger als Phosphorplatte ausgestaltet, die eine Ober- und eine Unterseite aufweist, die von einander verschiedene Beschichtungen haben. Diese beiden unterschiedlichen Beschichtungen weisen unterschiedliche Empfindlichkeiten auf. Durch die Beschichtung der einen Seite der Phosphorplatte können beispielsweise Knochen besser aufgezeichnet werden, und durch die Beschichtung der anderen Seite der Phosphorplatte beispielsweise Weichteile. Die Bedienperson hat aufgrund dieser Ausgestaltung der erfindungsgemäßen Röntgenkassette die Auswahl zwischen zwei Empfindlichkeiten. Dadurch kann die Flexibilität und Leistungsfähigkeit der erfindungsgemäßen Vorrichtung weiter erhöht werden.

Weitere vorteilhafte Ausgestaltungen der Erfindung können den abhängigen Patentansprüchen entnommen werden.

Im folgenden werden die Erfindung und ihre Vorteile anhand von Ausführungsbeispielen und den Zeichnungen beschrieben.

Es zeigen:

Fig. 1    ein erstes Ausführungsbeispiel einer erfindungsgemäßen Vorrichtung zum Auslesen von in einem Phosphorträger abgespeicherter Information in Form eines Lesekopfes,

Fig. 2    eine weitere Ansicht des ersten Ausführungsbeispiels der erfindungsgemäßen Lesekopfes,

Fig. 3    ein Beispiel einer schematischen Darstellung einer Einteilung einer Phosphorplatte in Zeilen und Punkte,

Fig. 4    ein zweites Ausführungsbeispiel der erfindungsgemäßen Vorrichtung,

Fig. 5    ein drittes Ausführungsbeispiel der erfindungsgemäßen Vorrichtung mit zwei Leseköpfen und

Fig. 6    ein Ausführungsbeispiel einer erfindungsgemäßen Röntgenkassette.

Im folgenden werden für gleiche und gleichwirkende Elemente der verschiedenen Ausführungsbeispiele durchweg gleiche Bezugszeichen verwendet.

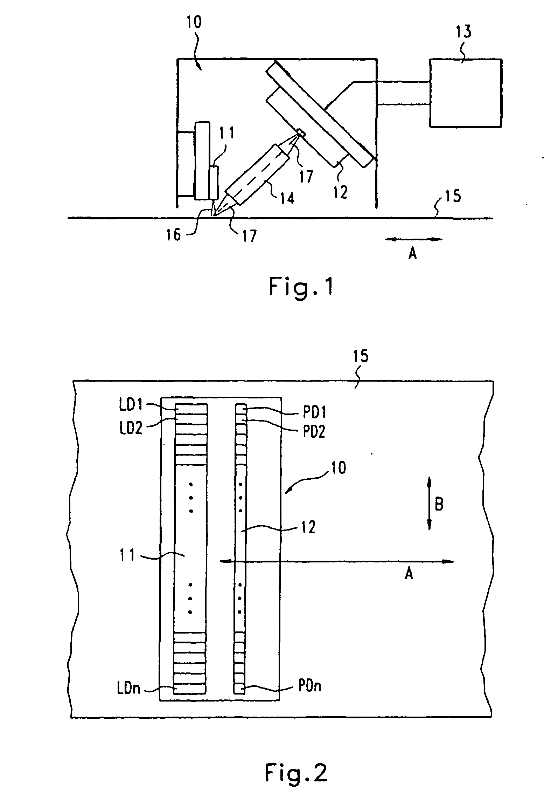

Figur 1 zeigt das erste Ausführungsbeispiel der erfindungsgemäßen Vorrichtung zum Auslesen von einer in einem Phosphorträger abgespeicherten Information. Ein Lesekopf 10 wird dazu verwendet, eine Bildinformation aus einer Phosphorplatte 15 auszulesen. Diese Bildinformation wurde mittels Röntgenbestrahlung in der Phosphorplatte 15 erzeugt. Der Lesekopf 10 weist eine Strahlungsquelle auf, die hier als Laserdiodenzeile 11 ausgestaltet ist. Die Laserdiodenzeile 11 ist senkrecht auf die Phosphorplatte 15 ausgerichtet, so daß die von den einzelnen Laserdioden ausgesandte Strahlung direkt auf die Phosphorplatte trifft. Die Laserdiodenzeile 11 weist eine Vielzahl von nebeneinander angeordneten Laserdioden auf, die im vorliegenden Ausführungsbeispiel die gesamte Breite der rechteckigen Phosphorplatte, in der Information abgespeichert werden kann, anregen kann. Die Laserdiodenzeile enthält hier 4096 parallel in einer Linie nebeneinander angeordnete Laserdioden.

Der Lesekopf 10 enthält des weiteren ein Empfangsmittel, das im vorliegenden Ausführungsbeispiel als "Charge-Coupled-Device"(CCD)-Zeile 12 ausgestaltet ist. Diese CCD-Zeile 12 weist eine Vielzahl von parallel in einer Linie nebeneinander angeordneten Fotodetektoren auf. Mit diesen Fotodetektoren kann eine fotoelektrische Wandlung einer empfangenen Lichtstrahlung durchgeführt werden. Sie stellen die Punktelemente des Empfangsmittels dar. Jeder Fotodetektor kann eine von einem der angeregten Punkte der Phosphorplatte ausgesandte Lichtstrahlung empfangen. Im vorliegenden Ausführungsbeispiel sind daher in der CCD-Zeile 12 4096 einzelne Fotodetektoren vorgesehen.

Zwischen der Phosphorplatte 15 und der CCD-Zeile 12 ist ein Abbildungsmittel mit sogenannten Selfoc-Linsen vorgesehen. Für jeden anregbaren Punkt der Zeile der Phosphorplatte 15 kann eine Selfoc-Linse vorgesehen sein, was allerdings für die Erfindung nicht notwendig ist. Die Selfoc-Linse ist im wesentlichen eine Glasfaser, die einen Gradienten im Brechungsindex zur Mitte hin aufweist. Sie kann aufgrund von einer Totalreflexion weitgehend verlustfrei Licht gebündelt weiterleiten. Jede Selfoc-Linse gewährleistet, daß der Einfallswinkel des Lichts am Eingang der Selfoc-Linse gleich dem Ausfallwinkel des Lichtes am Ausgang ist. Mit einer ein- oder zweidimensionalen Anordnung solcher Selfoc-Linsen kann somit ein dieser Anordnung zugeordneter Abbildungsbereich exakt 1:1 auf einen Bildbereich abgebildet werden. Mittels einer geeigneten Anordnung solcher Selfoc-Linsen ist das von einem der angeregten Punkte der Phosphorplatte 15 ausgesandte Licht auf einfache Weise und sehr genau auf dem zugeordneten Fotodetektor der CCD-Zeile 12 abbildbar. Anstelle der Selfoc-Linse können auch Mikrolinsenarrays verwendet werden.

Die CCD-Zeile 12 ist an ihrem Ausgang mit einer Datenverarbeitungseinrichtung 13 verbunden. Diese Datenverarbeitungseinrichtung 13 hat die Aufgabe, die von der CCD-Zeile 12 erzeugten elektrischen Signale, die ein Abbild der in der Phosphorplatte 15 abgespeicherten Bildinformation enthalten, auszuwerten und aufzubereiten und darüber hinaus die Strahlungsquelle 11, insbesondere deren Vorschub zum zeilenweisen Auslesen der Phosphorplatte 15, zu steuern. Die von der CCD-Zeile 12 erzeugten elektrischen Signale werden in der Datenverarbeitungseinrichtung 13 einer Analog-Digitalwandlung unterzogen. Die so erhaltenen digitalen Bilddaten können anschließend von einem digitalen Signalprozessor mittels zuvor in der Datenverarbeitungseinrichtung 13 abgespeicherten Algorithmen verarbeitet werden. Insbesondere können durch den digitalen Signalprozessor Korrekturwerte berechnet und die einzelnen digitalen Bilddaten der Bildinformation einer Korrekturprozedur unterworfen werden. Dadurch können Kurz- und Langzeitschwankungen einzelner Komponenten des erfindungsgemäßen Lesekopfes 10 oder der Phosphorplatte 15 berücksichtig werden, die ansonsten zu Fehlern und Verzerrungen bei der Wiedergabe der in der Phosphorplatte abgespeicherten Bildinformation führen würden. Solche Kurz- und Langzeitänderungen können beispielsweise Leistungsschwankungen der verwendeten Laserdioden sein, die aufgrund von Temperaturschwankungen oder Alterungserscheinungen auftreten. Es können aber ebenso Ungleichmäßigkeiten in der Röntgenplatte 15 vorhanden sein, die die von der Phosphorplatte 15 ausgesandte Lichtstrahlung verfälschen. Es ist möglich, die von der Datenverarbeitungseinrichtung 13 durchgeführten Korrekturen, in Abhängigkeit von der Art des zu korrigierenden Fehlers, vor jedem Lesedurchgang oder in größeren Zeitabständen durchzuführen.

Aufgrund der erfindungsgemäßen Anregung mehrerer Punkte der Phosphorplatte 15, insbesondere aller Punkte einer der Zeilen der Phosphorplatte 15, ist es möglich, eine Verweilzeit von etwa 1 ms der ersten Strahlung pro Punkt des Phosphorträgers 15 vorzusehen. Die von einer Laserdiode aufzubringende Leistung kann dann bei etwa einem Milliwatt liegen.

Die Größe einer Zeile der Phosphorplatte 15 und die Größe ihrer anregbaren Punkte werden durch den Querschnitt des die einzelnen Punkte der Phosphorplatte 15 anregenden Laserdiodenstrahls und die Größe der lichtempfangenden Fläche der einzelnen Fotodetektoren bestimmt.

Im Betrieb sendet die Laserdiodenzeile 11 zum Anregen der Punkte einer Zeile der Phosporplatte 15 eine erste Strahlung 16 aus, die aufgrund der Zusammensetzung der Laserdiodenzeile 11 aus 4096 Laserdioden aus 4096 einzelnen Laserdiodenstrahlen besteht. Mit diesen 4096 einzelnen Laserdiodenstrahlen können daher in einer Zeile der Phosphorplatte 15 4096 einzelne Punkte zum Strahlen angeregt werden. Die Laserdioden der Laserdiodenzeile 11 haben einen Mittenabstand von etwa 80 $\mu$m. Da der Abstand zwischen der Laserdiodenzeile 11 und der Phosphorplatte 15 sehr klein (vorteilhafterweise < 0,5mm) ist, ist eine Optik zur Fokussierung der Laserdiodenstrahlen nicht notwendig. Die Aufweitung der einzelnen Laserdiodenstrahlen ist so gering, daß benachbarte Punkte auf der Phosphorplatte 15 im großen und ganzen nicht angeregt werden. Der Mittenabstand zweier Laserdioden in der Laserdiodenzeile 11 entspricht daher im wesentlichen dem Abstand zweier angeregter Punkte auf der Phosphorplatte 15.

Die aufgrund der ersten Strahlung 16 angeregten Punkte der Phosphorplatte 15 senden eine zweite Strahlung 17 aus, die von den Selfoc-Linsen der Selfoc-Linsenzeile 14 auf die einzelnen Fotodetektoren der CCD-Zeile 12 abgebildet wird. In bekannter Weise führt die CCD-Zeile 12 die fotoelektrische Wandlung des empfangenen und von der Phosphorplatte 15 emittierten Lichts durch und leitet die erzeugten elektrischen Signale, die das Abbild der in der Phosphorplatte 15 abgespeicherten Bildinformation enthalten, an die Datenverarbeitungseinrichtung 13 zur Aufbereitung weiter.

Durch das Anregen aller Punkte einer der Zeilen der Phosphorplatte 15 reduziert sich die Bandbreite B und damit die Rauschleistung P. Diese ist proportional der Bandbreite B gemäß der folgenden Gleichung:

$$P = 4 * k * T * B \, ,$$

wobei T = Absolute Temperatur und k = Boltzmann-Konstante.

Figur 2 zeigt eine weitere Ansicht des erfindungsgemäßen Lesekopfs 10 gemäß dem ersten Ausführungsbeispiel. Die Figur 2 zeigt eine Draufsicht auf den erfindungsgemäßen Lesekopf und die Phosphorplatte 15. Der Lesekopf 10 ist in einer Schnittdarstellung gezeigt. Der Lesekopf 10 überspannt die gesamte Breite der Phosphorplatte 15, in der Informationen abgespeichert sein können. Die Figur 2 zeigt schematisch die Laserdiodenzeile 11 mit parallel nebeneinander angeordneten Laserdioden LD1 bis LDn. Ebenfalls abgebildet ist die CCD-Zeile 12 mit parallel nebeneinander angeordneten Fotodetektoren PD1 bis PDn. In diesem Ausführungsbeispiel enthält die Laserdiodenzeile 11 4096 Laserdioden und die CCD-Zeile 12 4096 einzelne Fotodetektoren, so daß n = 4096 ist. Der Lesekopf 10 ist in eine Vorschubrichtung A hin- und herbewegbar. Auf diese Weise können die Zeilen der Phosphorplatte 15 nacheinander abgetastet und die in den verschiedenen Zeilen der Phosphorplatte 15 abgespeicherte Bildinformation ausgelesen werden. Es ist auch möglich, anstelle des Lesekopfs 10 die Phosphorplatte 15 in Richtung der Vorschubrichtung A hin und herbewegbar auszugestalten.

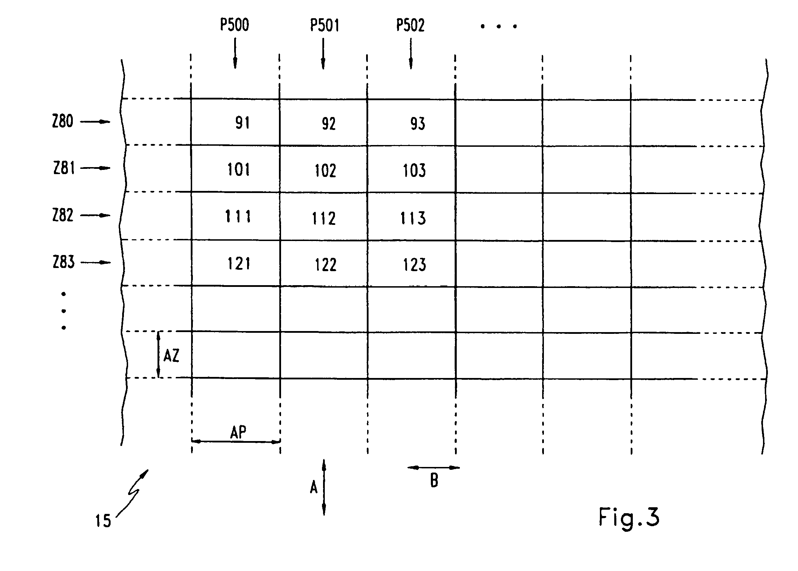

Figur 3 zeigt ein Beispiel einer schematische Darstellung einer Einteilung der Phosphorplatte 15 nach Zeilen und Punkten dieser Zeilen, wie sie aufgrund der Ausgestaltung der Größen der anregenden Laserdiodenstrahlen und der lichtempfangenden Flächen der Fotodetektoren der CCD-Zeile 12 vorgegeben wird. Eine Zeilenlänge AZ gibt die Länge einer Zeile der Phosphorplatte 15 in die Vorschubrichtung A des Lesekopfes 10 an. Diese Länge AZ wird hier durch den Querschnitt des anregenden Laserdiodenstrahls bestimmt. Die Länge AZ der Zeilen beträgt hier etwa $20\mu m$. Diese Zeilenlänge AZ gibt gleichzeitig die Länge eines der Punkte der Zeile vor. Eine Punktbreite AP gibt die Breite eines Punkts der Zeile in Zeilenrichtung B an. Diese Breite AP wird hier durch die lichtempfangende Fläche eines der Fotodetektoren der CCD-Zeile 12 vorgegeben. Sie beträgt hier etwa $80\mu m$.

Stellvertretend für die Zeilen der Phosphorplatte 15 sind in der Figur 3 vier aufeinanderfolgende Zeilen Z80, Z81, Z82 und Z83 abgebildet. Die erste Zeile Z80 enthält u. a. drei Punkte 91, 92 und 93. Die zweite Zeile Z81 enthält u. a. drei Punkte 101, 102 und 103. Die dritte Zeile Z82 enthält u. a. drei Punkte 111, 112 und 103 und die vierte Zeile Z83 u. a. drei Punkte 121, 122 und 123. Die Punkte der Zeilen sind untereinander angeordnet, so daß sich verschiedene Reihen P500, P501 und P502 von Punkten bilden, die alle unterschiedlichen Zeilen zugeordnet sind. Im Beispiel gemäß der Figur 3 sind die Punkte 91, 101, 111 und 121 in der ersten Reihe P500, die Punkte 92, 102, 112 und 122 in der zweiten Reihe P501 sowie die Punkte 93, 103, 113 und 123 in der dritten Reihe P502 enthalten. Die Punkte, die in einer der Reihen untereinander angeordnet sind und jeweils zu verschiedenen Zeilen gehören, werden hier als dieselben Punkte der verschiedenen Zeilen bezeichnet.

Zur Verbesserung des Signal-Rausch-Verhältnisses können die Intensitäten der zweiten Strahlung, die von mehreren, untereinander in einer Reihe liegenden Punkten mehrerer benachbarter Zeilen nach deren Anregen von der Datenverarbeitungseinrichtung 13 aufintegriert, d.h. zusammengefaßt, werden. Anschließend wird aus diesen aufintegrierten Intensitäten der Mittelwert bestimmt. Dieser Mittelwert bestimmt nun die Wiedergabe der so zusammengefaßten Punkte der Reihe. Im vorliegenden Ausführungsbeispiel werden jeweils die in den verschiedenen Reihen untereinanderliegenden Punkte der vier Zeilen Z80, Z81, Z82 und Z83 zusammengefaßt. Das bedeutet, daß die empfangenen Strahlungsintensitäten der Punkte 91, 101, 111 und 121 der ersten Reihe P500, diejenigen der Punkte 92, 102, 112 und 122 der zweiten Reihe P501, diejenigen der Punkte 93, 103, 113 und 123 der dritten Reihe P502, usw., zusammengefaßt und einer anschließenden Mittelwertbildung unterworfen werden. Auf diese Weise werden daher dieselben Punkte mit jeweils einer Länge von $20\mu m$ von vier Zeilen zu einem "großen" Punkt zusammengefaßt, der dann eine Länge in Vorschubrichtung A von etwa $80\mu m$ aufweist. Als Nachteil wird dabei in Kauf genommen, daß die Auflösung bei der Wiedergabe der abgespeicherten Bildinformation sinkt. Allerdings können so die Auswirkungen von Rauschquellen, wie beispielsweise dem Röntgenstrahlrauschen beim Beschreiben der Phosphorplatte, dem Lichtphotonenrauschen beim Auslesen der Phosphorplatte oder das Phosphorplattenrauschen, reduziert werden.

Anstelle einer Laserdiodenzeile, die über die gesamte Breite der Phosphorplatte 15 verläuft, ist es ebenso möglich, eine Strahlungsquelle mit Laserdioden zu verwenden, die nur einen Teil einer Zeile Phosphorplatte 15 zum Leuchten anregen. Zum Auslesen der in der gesamten Zeile der Phosphorplatte 15 abgespeicherten Bildinformation ist es dann allerdings notwendig, diese Strahlungsquelle in Ausbreitungsrichtung B der Zeile zu verschieben.

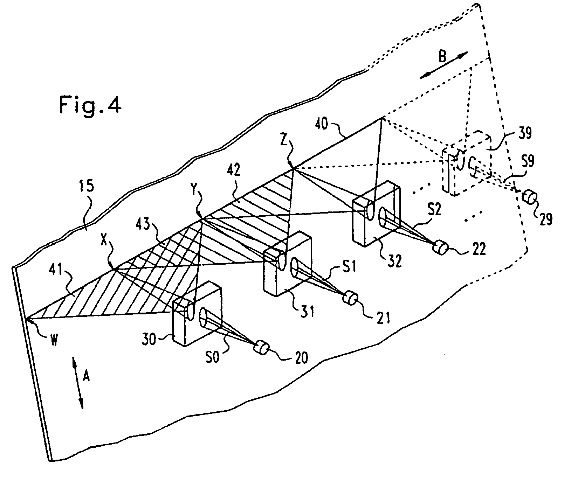

Figur 4 zeigt ein zweites Ausführungsbeispiel der erfindungsgemäßen Vorrichtung. Diese weist hier eine Vielzahl von Laserdioden 20 bis 29 auf, deren Laserdiodenstrahlen S0 bis S9 über Abbildungsoptiken 30 bis 39 auf der Phosphorplatte 15 abgebildet werden. Dabei ist jeweils eine der Abbildungsoptiken einer der Laserdioden zugeordnet. Die Abbildungsoptiken können beispielsweise einfachheitshalber mittels Zylinderlinsen realisiert sein. In diesem Ausführungsbeispiel wird jede Laserdiode 20 bis 29 für das Anregen mehrerer Punkte der Phosphorplatte verwendet. Die der jeweiligen Laserdiode 20 bis 29 zugeordnete Abbildungsoptik 30 bis 39 weitet dazu den jeweiligen Laserdiodenstrahl S1 bis S9 in Ausbreitungsrichtung B der anzuregenden Zeile auf. Die Figur 4 zeigt eine durch die aufgeweiteten Laserdiodenstrahlen S0 bis S9 angeregte Zeile 40. Darüber hinaus zeigt die Figur 4 stellvertretend für die Strahlenfelder aller Laserdioden 20 bis 29 ein erstes Strahlenfeld 41, das von der ersten Laserdiode 20 mittels der dieser ersten Laserdiode 20 zugeordneten Abbildungsoptik 30 erzeugt wird. Dazu weitet die Abbildungsoptik 30 den Laserdiodenstrahl S1 der Laserdiode 20 in Ausbreitungsrichtung B der Zeile 40 auf. Eine Grenze des ersten Strahlenfeldes 41 verläuft daher auf der Zeile 40 von einem ersten Punkt W bis zu einem dritten Punkt Y. Der durch die Abbildungsoptik 30 aufgeweitete LaLaserdiodenstrahl S0 der Laserdiode 20 wird durch diese Abbildungsoptik 30 ebenfalls in die Richtung A, die senkrecht zu der Ausbreitungsrichtung B der Zeile verläuft und der Vorschubrichtung des erfindungsgemäßen Lesekopfes zum Abtasten der Phosphorplatte 15 entspricht, fokussiert. Es ist daher gewährleistet, daß durch das erste Strahlenfeld 41 ausschließlich Punkte auf der anzuregenden Zeile 40 zum Leuchten angeregt werden. Diese Punkte liegen zwischen dem ersten Punkt W und dem dritten Punkt Y.

Die Figur 4 zeigt ebenfalls stellvertretend ein zweites Strahlenfeld 42, das von einer zweiten Abbildungsoptik 31 durch Aufbereitung und Fokussierung eines weiteren Laserdiodenstrahles S1, der von einer weiteren Laserdiode 21 stammt, erzeugt wird. Dieser weitere Laserdiodenstrahl S1 wird durch die Abbildungsoptik 31 ebenfalls in Ausbreitungsrichtung B der Zeile 40 aufgeweitet und in Vorschubrichtung A des Lesekopfes fokussiert. Das zweite Strahlenfeld 42 regt daher diejenigen Punkte der Zeile 40 an, die zwischen einem zweiten Punkt X und einem vierten Punkt Z liegen. Der zweite Punkt X liegt dabei genau in der Mitte des ersten Punktes W und des dritten Punktes Y.

Durch diese Anordnung ergibt sich ein Überlagerungsfeld 43, in dem sich das erste Strahlenfeld 41 und das zweite Strahlenfeld 42 überlagern. Die Intensität des Überlagerungsfeldes 43 ist daher in etwa doppelt so groß wie die Einzelintensitäten des ersten und zweiten Strahlenfeldes 41 bzw. 42.

Durch die gleichmäßige Anordnung der einzelnen Laserdioden 20 bis 29 und der ihnen zugeordneten Abbildungsoptiken 30 bis 39 ist gewährleistet, daß jeder anzuregende Punkt der Zeile 40 durch die aufgeweiteten und fokussierten Laserdiodenstrahlen zweier Laserdioden angeregt wird. Auf diese Weise ist es vorteilhafterweise möglich, die Funktionssicherheit dieser Strahlungsquelle zu erhöhen, da auch bei Ausfall einer der Laserdioden 20 bis 29 das Anregen aller Punkte der anzuregenden Zeile 40 gewährleistet ist. Die Intensität der anregenden Strahlung wird bei Ausfall einer der Laserdioden 20 bis 29 in dem jeweiligen ausfallenden Bereich geringer, allerdings kann dieser Ausfall detektiert werden, so daß die Datenverarbeitungseinrichtung, die die Verarbeitung der digitalen Bilddaten nach dem Wandeln des von dem Empfangsmittel detektierten Lichts in elektrische Signale vornimmt, die durch den Ausfall fehlerhaften digitalen Bilddaten korrigieren kann.

Alternativ zu dem Ausführungsbeispiel der Figur 4 ist es auch möglich, mehr als zwei Laserdiodenstrahlen auf jeweils einem Punkte der anzuregenden Zeile zu überlagern. Dadurch kann die Ausfallsicherheit noch weiter erhöht werden. Des weiteren kann die Anzahl der Laserdioden der Strahlungsquelle verändert werden. Sie ist nicht auf die in diesem Ausführungsbeispiel beschriebene Anzahl von zehn Laserdioden beschränkt.

Im übrigen ist es ebenfalls möglich, als Strahlungsquelle sogenannte Leuchtdioden (LED) zu verwenden, falls diese eine genügend hohe Abstrahlintensität erreichen. LEDs können vorteilhafterweise ebenfalls in Zeilenform verwendet werden.

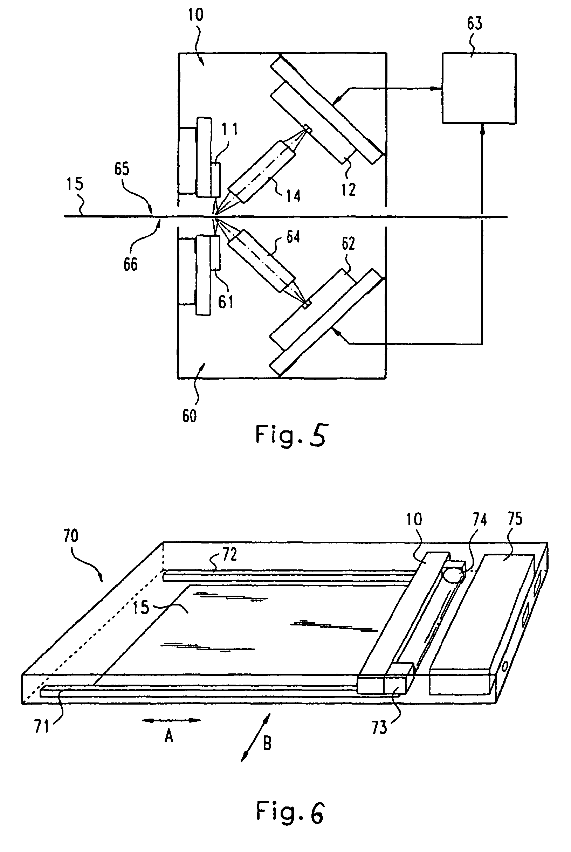

Figur 5 zeigt ein drittes Ausführungsbeispiel der erfindungsgemäßen Vorrichtung. In diesem Ausführungsbeispiel ist die Phosphorplatte 15 auf ihrer Oberseite 65 mit einer ersten Beschichtung versehen, die sich von einer zweiten Beschichtung, die auf der Unterseite 66 der Phosphorplatte 15 aufgetragen ist, ununterscheidet. Die Beschichtungen der Oberseite 65 und der Unterseite 66 der Phosphorplatte 15 haben voneinander unterschiedliche Empfindlichkeiten. Dadurch können geröntgte Objekte, die voneinander stark verschiedene Kontrastunterschiede aufweisen, wie beispielsweise Knochen oder Weichteile, mit der gleichen Phosphorplatte mit sehr guter Qualität wiedergegeben werden.

Die erfindungsgemäße Vorrichtung gemäß der Figur 5 weist zum Lesen der Phosphorplatte 15 zwei Leseköpfe 10 und 60 auf. Die beiden Leseköpfe 10 und 60 entsprechen in ihrem Aufbau demjenigen des Lesekopf 10, wie er bereits oben anhand des ersten Ausführungsbeispiels gemäß der Figur 1 und 2 beschrieben wurde. Die Leseköpfe 10 und 60 weisen daher beide jeweils eine Laserdiodenzeile 11 bzw. 61 zum Anregen der Punkte der Phosphorplatte 15 auf. Darüber hinaus enthalten sie jeweils eine CCD-Zeile 12 bzw. 62 zum Empfangen der von den angeregten Punkten der Phosphorplatte 15 emittierten Strahlung, die von einer Selfoc-Linsenzeile 14 bzw. 64 auf den dazugehörigen CCD-Zeilen 12 bzw. 62 abgebildet wird. Die von den beiden CCD-Zeilen 12 bzw. 62 erzeugten elektrischen Signale, die ein Abbild der in der Röntgenplatte 15 abgespeicherten Bildinformation enthalten, werden einer gemeinsamen Datenverarbeitungseinrichtung 63 zugeleitet. Diese Datenverarbeitungseinrichtung 63 steuert die Funktionsweise der beiden Leseköpfe 10 und 60. Sie kann beispielsweise vorgeben, ob einer der beiden Leseköpfe 10 bzw. 60 oder beide zusammen die in der Phosphorplatte 15 enthaltene Bildinformation auslesen sollen. Die von den beiden CCD-Zeilen 12 und 62 übermittelten elektrischen Signale werden in der Datenverarbeitungseinrichtung 63 zu einem Gesamtbild zusammengefügt. Dabei können die beiden Signale unterschiedlich gewichtet werden.

Durch das mögliche beidseitige Auslesen der Phosphorplatte 15 kann eine weitere Verbesserung bei der Wiedergabe der ausgelesenen Bildinformation erzielt werden. Dies insbesondere deshalb, da mehr in der Phosphorplatte abgespeicherte Information ausgelesen werden kann. Dabei können vorteilhafterweise die Streuungen der Anregungsstrahlungen, die beim Eindringen der Anregungsstrahlungen in die beidseitig beschichtete Phosphorplatte 15 entstehen, im Vergleich zu einem einzigen Lesekopf, der an einer der Seiten der Phosphorplatte 15 angebracht ist und der Bildinformationen aus der beidseitig beschichteten Phosphorplatte ausliest, gering gehalten werden. Dadurch kann die Verunschärfung der ausgelesenen Bildinformation aufgrund von Streustrahlung wesentlich reduziert werden.

Anstelle der beiden Laserdiodenzeilen 11 und 61 können auch die zuvor beschriebenen anderen Strahlungsquellen zum Anregen der einzelnen Punkte der Phosphorplatte 15 verwendet werden.

Figur 6 zeigt ein Ausführungsbeispiel einer erfindungsgemäßen Röntgenkassette 70, die eine erfindungsgemäße Vorrichtung zum Auslesen von einer in einem Phosphorträger abgespeicherten Information aufweist. Eine solche erfindungsgemäße Vorrichtung ist im vorliegenden Ausführungsbeispiel der Lesekopf 10, der bereits zuvor anhand des ersten Ausführungsbeispiels unter Figuren 1 und 2 beschrieben wurde. Die erfindungsgemäße Röntgenkassette 70 weist darüber hinaus die Phosphorplatte 15 auf, in der die Information abgespeichert werden kann, die von dem Lesekopf 10 ausgelesen werden soll. Entlang der beiden Längsseiten der Phosphorplatte 15 sind Führungsstäbe 71 und 72 angebracht, die dem Antrieb und der Führung des Lesekopfes 10 dienen. Der Lesekopf 10 kann vorteilhafterweise von einem Linearmotor 73 angetrieben werden, so daß er entlang seiner Vorschubrichtung A zeilenweise über die Phosphorplatte 15 geführt werden kann. Für die exakte Steuerung des Antriebs des Linearmotors 73 ist in der Röntgenkassette eine Steuereinrichtung 75 vorgesehen. Die beiden Führungsstäbe 71 und 72 dienen hier als Reaktionsteile für den Linearmotor 73. Aufgrund der Verwendung des Linearmotors 73 für den Antrieb des Lesekopfes 10 kann auf eine aufwendige, Ungenauigkeiten erzeugende Kraftübertragung von einem herkömmlichen Elektromotor mit rotierender Welle auf den Lesekopf 10 verzichtet werden.

Längs hinter dem Lesekopf 10 ist eine Löschlampe 74 angebracht, die ebenfalls von dem Linearmotor 73 über die Phosphorplatte 15 geführt werden kann, um eine darin abgespeicherte Bildinformation zu löschen. Vorteilhafterweise werden der Lesekopf 10 und die Löschlampe 74 von dem gleichen Linearmotor 73 über die Phosphorplatte 15 bewegt.

Eine solche erfindungsgemäße Röntgenkassette kann direkt in einen Röntgentisch eingeschoben werden, so daß ein Herausnehmen der Röntgenkassette zum Auslesen der darin abgespeicherten Bildinformation nicht notwendig ist. Die Röntgenkassette 70 weist Schnittstellen auf, über die die von dem Lesekopf 10 erzeugten digitalen Daten an einen Monitor oder einen Printer weitergegeben werden können.

Aufgrund der erfindungsgemäßen Ausgestaltung der Vorrichtung zum Auslesen der in einem Phosphorträger abgespeicherten Informationen kann die Röntgenkassette mit sehr geringen Ausmaßen gefertigt werden. Es ist möglich, die Dikke der Röntgenkassette auf ca. 45 mm zu begrenzen, so daß sie dadurch auch in bereits im Betrieb befindliche, herkömmliche Röntgengeräte einschiebbar ist.

**Patentansprüche**

1. Vorrichtung (10, 60) zum zeilenweisen Auslesen von einer in einem Phosphorträger (15) abgespeicherten Information mit

 - mindestens einer Strahlungsquelle (11; LD1 bis LDn; 20 bis 29, 30 bis 39; 61) zum Aussenden einer ersten Strahlung (16), mit der der Phosphorträger (15) so anregbar ist, daß er eine zweite Strahlung (17) aussendet, die ein zumindest teilweises Abbild der abgespeicherten Information beinhaltet, und
 - mindestens einem Empfangsmittel (12, 62) zum punktweisen Empfangen der von dem Phosphorträger (15) ausgesandten zweiten Strahlung (17), wobei das Empfangsmittel (12, 62) eine Vielzahl von Punktelementen (PD1 bis PDn) aufweist und durch mehrere dieser Punktelemente (PD1 bis PDn) die von dem Phosphorträger (15) ausgesandte zweite Strahlung (17) gleichzeitig empfangbar ist,

 wobei die Strahlungsquelle (11; LD1 bis LDn; 20 bis 29, 30 bis 39; 61) so ausgestaltet ist, daß mehrere Einzelstrahlen (S0 bis S9) erzeugbar sind, **dadurch gekennzeichnet, daß** die Strahlungsquelle (11; LD1 bis LDn; 20 bis 29, 30 bis 39; 61) als Laserdiodenzeile (11; LD1 bis LDn; 20 bis 29) ausgestaltet ist und mindestens ein erstes Strahlenfeld (41) und mindestens ein zweites Strahlenfeld (42) erzeugen kann, wobei sich das erste Strahlenfeld (41) einer ersten Laserdiode (20) und das zweite Strahlenfeld (42) einer weiteren Laserdiode (21) in einem Überlagerungsfeld (43) auf einer Zeile (40) überlagern.

2. Vorrichtung nach Anspruch 1, **dadurch gekennzeichnet, daß** die Intensität des Überlagerungsfeldes (43) etwa doppelt so groß ist wie die Einzelintensitäten des ersten und zweiten Strahlenfeldes (41 bzw. 42).

3. Vorrichtung nach einem der Ansprüche 1 oder 2, **dadurch gekennzeichnet, daß** die Strahlungsquelle (11; LD1 bis LDn; 20 bis 29, 30 bis 39; 61) so ausgestaltet ist, daß mehrere, insbesondere alle, in einer Zeile (40) angeordnete Punkte des Phosphorträgers (15) gleichzeitig anregbar sind.

4. Vorrichtung nach einem der Ansprüche 1 bis 3, **dadurch gekennzeichnet, daß** das Empfangsmittel (12, 62) eine Photodetektorzeile, insbesondere eine Charge-Coupled-Device(CCD)-Zeile, ist.

5. Vorrichtung nach Anspruch 1, **dadurch gekennzeichnet, daß** sich mehr als zwei Einzel strahlen (S0 bis S9) auf jeweils einem Punkt der anzuregenden Zeile (40) überlagern.

6. Vorrichtung nach Anspruch 1, **dadurch gekennzeichnet, daß** Abbildungsoptiken (30 bis 39) vorgesehen sind, über welche die Einzel strahlen (S0 bis S9) auf den als Phosphorplatte ausgebildeten Phosphorträger (15) abgebildet werden.

7. Vorrichtung nach Anspruch 6, **dadurch gekennzeichnet, daß** die Abbildungsoptiken (30 bis 39) mittels Zylinderlinsen realisiert werden.

8. Vorrichtung nach Anspruch 1, **dadurch gekennzeichnet, daß** sowohl die einzelnen Laserdioden (LD1 bis LDn) als auch die einzelnen Punktelemente (PD1 bis PDn) jeweils nebeneinander in einer Linie angeordnet sind.

9. Vorrichtung nach einem der vorangehenden Ansprüche, **dadurch gekennzeichnet, daß** zwischen dem Phosphorträger (15) und dem Empfangsmittel (12, 62) ein Abbildungsmittel (14, 64) angeordnet ist, mit dem die von den einzelnen Punkten des Phosphorträgers (15) ausgesandte zweite Strahlung (17) 1 : 1 auf die einzelnen Punktelemente (PD1 bis PDn) abbildbar ist.

10. Vorrichtung nach Anspruch 9, **dadurch gekennzeichnet, daß** das Abbildungsmittel (14, 64) Selfoc-Linsen aufweist, wobei für jeden anregbaren Punkt der Zeile (40) des als Phosphorplatte ausgebildeten Phosphorträgers (15) eine Selfoc-Linse vorgesehen ist.

11. Vorrichtung nach einem der Ansprüche 9 oder 10, **dadurch gekennzeichnet, daß** als Abbildungsmittel (14, 64) eine ein- oder zweidimensionale Anordnung von Selfoc-Linsen vorgesehen ist.

12. Vorrichtung nach Anspruch 9, **dadurch gekennzeichnet, daß** als Abbildungsmittel (14, 64) ein Mikrolinsenarray vorgesehen ist.

13. Vorrichtung nach einem der vorangehenden Ansprüche, **dadurch gekennzeichnet, daß** sie zwei Strahlungsquellen (11, 61) und zwei Empfangsmittel (12, 62) aufweist, die so angeordnet sind, daß die in dem Phosphorträger, der als Phosphorplatte (15) mit einer Oberseite (65) und einer Unterseite (66) ausgestaltet ist, abgespeicherte Information sowohl über die Ober- als auch über die Unterseite (65 bzw. 66) der Phosphorplatte (15) auslesbar ist.

14. Vorrichtung nach einem der vorangehenden Ansprüche, **dadurch gekennzeichnet, daß** sie ein Auswertemittel (13, 63) zur Auswertung der von dem Empfangsmittel (12, 62) punktweise empfangenen zweiten Strahlung (17) aufweist, wobei dieses Auswertemittel (13, 63) so ausgestaltet ist, daß Intensitäten der punktweise empfangenen zweiten Strahlung (17) von denselben Punkten (91,101,111,121; 92, 102,112,112,122; 93,103,113,123) mehrerer benachbarter Zeilen (Z80 bis Z83), die ausgelesen wurden, zusammenfaßbar und einer Mittelwertbildung unterziehbar sind.

15. Vorrichtung nach Anspruch 1, **dadurch gekennzeichnet, daß** die Länge (AZ) einer Zeile (Z80 bis Z83) des als Phosphorplatte ausgebildeten Phosphorträgers (15) durch den Querschnitt des anregenden Laserdiodenstrahls (S0 bis S9) bestimmt ist.

16. Vorrichtung nach Anspruch 1, **dadurch gekenn-** **zeichnet, daß** die Breite (AP) eines Punkts (91,101,111,121; 92, 102,112,112,122; 93,103,113,123) einer Zeile (Z80 bis Z83) des als Phosphorplatte ausgebildeten Phosphorträgers (15) durch eine lichtempfangende Fläche eines der Fotodetektoren (PD1 bis PDn) einer CCD-Zeile (12) vorgegeben wird.

17. Röntgenkassette (70) zum Beschreiben eines darin enthaltenen Phosphorträgers (15) mit einer Vorrichtung (10, 60) zum Auslesen einer in dem Phosphorträger (15) abgespeicherten Information nach einem der vorhergehenden Ansprüche.

18. Röntgenkassette nach Anspruch 17, **dadurch gekennzeichnet, daß** der Phosphorträger als Phosphorplatte (15) ausgestaltet ist, die eine Oberseite (65) und eine Unterseite (66) aufweist, wobei die Oberseite eine von der Unterseite unterschiedliche Beschichtung hat.

19. Röntgenkassette nach Anspruch 17 oder 18, **dadurch gekennzeichnet, daß** sie einen Linearantrieb (73), insbesondere einen elektrischen Linearmotor, zum Bewegen der Vorrichtung (10, 60) nach einem der Ansprüche 1 bis 16 über den Phosphorträger (15) aufweist.

20. Röntgenkassette nach einem der Ansprüche 17 bis 19, **dadurch gekennzeichnet, daß** sie ein Löschmittel (74) zum Löschen der in dem Phosphorträger (15) abgespeicherten Information aufweist.

21. Röntgenkassette nach Anspruch 19 und Anspruch 20, **dadurch gekennzeichnet, daß** das Löschmittel (74) so angeordnet ist, daß es von dem Linearantrieb (73) über den Phosphorträger (15) bewegbar ist.

**Claims**

1. An apparatus (10, 60) for reading out information stored in a phosphor carrier (15) line by line, comprising

   - at least one radiation source (11; LD1 to LDn; 20 to 29, 30 to 39; 61) in order to emit a first radiation (16) with which the phosphor carrier (15) can be stimulated such that it emits a second radiation (17) which includes at least a partial image of the information stored, and
   - at least one receiving means (12, 62) for receiving, dot by dot, the second radiation (17) emitted by the phosphor carrier (15), the receiving means (12, 62) having a plurality of dot elements (PD1 to PDn), and by means of a number of these dot elements (PD1 to PDn) it being possible to receive the second radiation (17) emitted by the phosphor carrier (15) at the same time,

the radiation source (11; LD1 to LDn; 20 to 29, 30 to 39; 61) being designed such that a number of individual beams (S0 to S9) can be generated, **characterised in that**
the radiation source (11; LD1 to LDn; 20 to 29, 30 to 39; 61) is in the form of a line of laser diodes (11; LD1 to LDn; 20 to 29), and can generate at least one first radiation field (41) and at least one second radiation field (42), the first radiation field (41) of a first laser diode (20) and the second radiation field (42) of a further laser diode (21) being overlaid on a line (40) in an overlay field (43).

2. The apparatus according to Claim 1, **characterised in that** the intensity of the overlay field (43) is approximately twice as great as the individual intensities of the first and second radiation fields (41 and 42).

3. The apparatus according to any of Claims 1 or 2, **characterised in that** the radiation source (11; LD1 to LDn; 20 to 29, 30 to 39; 61) is designed such that a number, in particular all, of the dots of the phosphor carrier (15) arranged in a line (40) can be stimulated at the same time.

4. The apparatus according to any of Claims 1 to 3, **characterised in that** the receiving means (12, 62) is a line of photodetectors, in particular a line of Charge-Coupled Devices (CCD).

5. The apparatus according to Claim 1, **characterised in that** more than two individual beams (S0 to S9) are overlaid on one point respectively of the line (40) to be stimulated.

6. The apparatus according to Claim 1, **characterised in that** imaging optics (30 to 39) are provided by means of which the individual beams (S0 to S9) are imaged onto the phosphor carrier in the form of a phosphor plate (15).

7. The apparatus according to Claim 6, **characterised in that** the imaging optics (30 to 39) are produced by means of cylinder lenses.

8. The apparatus according to Claim 1, **characterised in that** both the individual laser diodes (LD1 to LDn) and the individual dot elements (PD1 to PDn) are respectively arranged next to one another in a line.

9. The apparatus according to any of the preceding claims, **characterised in that** there is disposed between the phosphor carrier (15) and the receiving means (12, 62) an imaging means (14, 64) with which the second radiation (17) emitted by the individual dots of the phosphor carrier (15) can be imaged 1 : 1 onto the individual dot elements (PD1 to PDn).

10. The apparatus according to Claim 9, **characterised in that** the imaging means (14, 64) has Selfoc lenses, one Selfoc lens being provided for every stimulatable dot of the line (40) of the phosphor carrier in the form of a phosphor plate (15).

11. The apparatus according to either of Claims 9 or 10, **characterised in that** a one- or two-dimensional arrangement of Selfoc lenses is provided as imaging means (14, 64).

12. The apparatus according to Claim 9, **characterised in that** a microlens array is provided as imaging means (14, 64).

13. The apparatus according to any of the preceding claims, **characterised in that** it has two radiation sources (11, 61) and two receiving means (12, 62) which are arranged such that the information stored in the phosphor carrier, which is in the form of a phosphor plate (15) with an upper side (65) and a lower side (66), can be read out both via the upper and via the lower side (65 and 66) of the phosphor plate (15).

14. The apparatus according to any of the preceding claims, **characterised in that** it has an evaluation means (13, 63) for evaluating the second radiation (17) received dot by dot by the receiving means (12, 62), this evaluation means (13, 63) being designed such that intensities of the second radiation (17) received dot by dot from the same dots (91, 101, 111, 121; 92, 102, 112, 112, 122; 93, 103, 113, 123) of a number of adjacent lines (Z80 to Z83) which have been read out, can be combined and are subjected to determination of the average.

15. The apparatus according to Claim 1, **characterised in that** the length (AZ) of a line (Z80 to Z83) of the phosphor carrier in the form of a phosphor plate (15) is determined by the cross-section of the stimulating laser diode beam (S0 to S9).

16. The apparatus according to Claim 1, **characterised in that** the width (AP) of a dot (91, 101, 111, 121; 92, 102, 112, 112, 122; 93, 103, 113, 123) of a line (Z80 to Z93) of the phosphor carrier in the form of a phosphor plate (15) is pre-specified by a light-receiving surface of one of the photodetectors (PD1 to PDn) of a line of CCDs (12).

17. An X-ray cassette (70) for describing a phosphor carrier (15) contained therein (15) having an apparatus (10, 60) for reading out information stored in the phosphor carrier (15) according to any of the preceding claims.

**18.** The X-ray cassette according to Claim 17, **characterised in that** the phosphor carrier is in the form of a phosphor plate (15) which has an upper side (65) and a lower side (66), the upper side having a coating different from the lower side.

**19.** The X-ray cassette according to Claim 17 or 18, **characterised in that** it has a linear drive (73), in particular an electrical linear motor, for moving the apparatus (10, 60) according to any of Claims 1 to 16 over the phosphor carrier (15).

**20.** The X-ray cassette according to any of Claims 17 to 19, **characterised in that** it has an erasing means (74) for erasing the information stored in the phosphor carrier (15).

**21.** The X-ray cassette according to Claim 19 and Claim 20, **characterised in that** the erasing means (74) is positioned such that it can be moved by the linear drive (73) over the phosphor carrier (15).

## Revendications

**1.** Dispositif (10, 60) de lecture ligne par ligne d'une information enregistrée dans un support luminescent (15) comportant :

- au moins une source de rayonnement (11 ; LD1 à LDn ; 20 à 29, 30 à 39 ; 61) émettant un premier rayonnement (16) avec lequel le support luminescent (15) peut être excité de manière à émettre un second rayonnement (17) contenant une représentation au moins partielle de l'information enregistrée, et
- au moins un moyen de réception (12, 62) destiné à recevoir point par point le second rayonnement (17) émis par le support luminescent (15), le moyen de réception (12, 62) présentant une pluralité d'éléments ponctuels (PD1 à PDn) et le second rayonnement (17) émis par le support luminescent (15) pouvant être simultanément reçu par plusieurs de ces éléments ponctuels (PD1 à PDn),

la source de rayonnement (11 ; LD1 à LDn ; 20 à 29, 30 à 39 ; 61) étant conçue de manière à permettre la production de plusieurs faisceaux distincts (S0 à S9),
**caractérisé en ce que**
la source de rayonnement (11 ; LD1 à LDn ; 20 à 29, 30 à 39 ; 61) est conçue sous la forme d'une rangée de diodes laser (11 ; LD1 à LDn ; 20 à 29) et est capable de produire au moins un premier champ de rayonnement (41) et au moins un deuxième champ de rayonnement (42), le premier champ de rayonnement (41) d'une première diode laser (20) et le deuxième champ de rayonnement (42) d'une autre diode laser (21) se chevauchant en un champ de chevauchement (43) sur une ligne (40).

**2.** Dispositif selon la revendication 1, **caractérisé en ce que** l'intensité du champ de chevauchement (43) est environ deux fois plus importante que les intensités individuelles du premier et du deuxième champ de rayonnement (41 et 42 respectivement).

**3.** Dispositif selon l'une des revendications 1 ou 2, **caractérisé en ce que** la source de rayonnement (11 ; LD1 à LDn ; 20 à 29, 30 à 39 ; 61) est conçue de telle façon que plusieurs, notamment la totalité, des points du support luminescent (15) agencés dans une ligne (40) puissent être excités simultanément.

**4.** Dispositif selon l'une des revendications 1 à 3, **caractérisé en ce que** le moyen de réception (12, 62) consiste en une rangée de photodétecteurs, notamment une rangée de dispositifs à couplage de charge (CCD).

**5.** Dispositif selon la revendication 1, **caractérisé en ce que** plus de deux faisceaux individuels (S0 à S9) se chevauchent en un même point de la ligne (40) à exciter.

**6.** Dispositif selon la revendication 1, **caractérisé en ce que** des systèmes optiques de représentation (30 à 39) sont prévus pour reproduire les faisceaux individuels (S0 à S9) sur le support luminescent (15) conçu sous la forme d'une plaque luminescente.

**7.** Dispositif selon la revendication 6, **caractérisé en ce que** les systèmes optiques de représentation (30 à 39) sont réalisés au moyen de lentilles cylindriques.

**8.** Dispositif selon la revendication 1, **caractérisé en ce que** les diodes laser (LD1 à LDn) individuelles ainsi que les éléments ponctuels (PD1 à PDn) individuels sont agencés côte à côte sous la forme d'une rangée respective.

**9.** Dispositif selon l'une des revendications précédentes, **caractérisé en ce qu'**un moyen de représentation (14, 64) est agencé entre le support luminescent (15) et le moyen de réception (12, 62) pour permettre la représentation 1 : 1 du second rayonnement (17) émis par les points individuels du support luminescent (15) sur les éléments ponctuels individuels (PD1 à PDn).

**10.** Dispositif selon la revendication 9, **caractérisé en ce que** le moyen de représentation (14, 64) présente des lentilles Selfoc, une lentille Selfoc étant prévue pour chaque point excitable de la ligne (40) du support luminescent (15) conçu sous la forme d'une plaque luminescente.

**11.** Dispositif selon l'une des revendications 9 ou 10, **caractérisé en ce qu'**il est prévu, comme moyen de représentation (14, 64), un agencement uni- ou bidimensionnel de lentilles Selfoc.

**12.** Dispositif selon la revendication 9, **caractérisé en ce qu'**il est prévu, comme moyen de représentation (14, 64), une matrice de microlentilles.

**13.** Dispositif selon l'une des revendications précédentes, **caractérisé en ce qu'**il présente deux sources de rayonnement (11, 61) et deux moyens de réception (12, 62) qui sont agencés de telle façon que l'information enregistrée dans le support luminescent conçu sous la forme d'une plaque luminescente (15), présentant une face supérieure (65) et une face inférieure (66), puisse être lue aussi bien sur la face supérieure que sur la face inférieure (65 et 66 respectivement) de la plaque luminescente (15).

**14.** Dispositif selon l'une des revendications précédentes, **caractérisé en ce qu'**il présente un moyen d'exploitation (13, 63) destiné à exploiter le second rayonnement (17) reçu point par point par le moyen de réception (12, 62), ledit moyen d'exploitation (13, 63) étant conçu de manière que les intensités du second rayonnement (17) reçu point par point des mêmes points (91, 101, 111, 121 ; 92, 102, 112, 112, 122 ; 93, 103, 113, 123) de plusieurs rangées voisines (Z80 à Z83) qui ont été lues puissent être regroupées et soumises au calcul d'une valeur moyenne.

**15.** Dispositif selon la revendication 1, **caractérisé en ce que** la longueur (AZ) d'une rangée (Z80 à Z83) du support luminescent conçu sous la forme d'une plaque luminescente (15) est déterminée par la section transversale du faisceau de la diode laser (S0 à S9) réalisant l'excitation.

**16.** Dispositif selon la revendication 1, **caractérisé en ce que** la largeur (AP) d'un point (91, 101, 111, 121 ; 92, 102, 112, 112, 122 ; 93, 103, 113, 123) d'une rangée (Z80 à Z83) du support luminescent conçu sous la forme d'une plaque luminescente (15) est imposée par une surface photoréceptrice d'un des photodétecteurs (PD1 à PDn) d'une rangée de CCD (12).

**17.** Cassette radiographique (70) destinée à l'écriture sur un support luminescent (15) qu'elle contient à l'aide d'un dispositif (10, 60) permettant la lecture d'une information enregistrée dans le support luminescent (15) selon l'une des revendications précédentes.

**18.** Cassette radiographique selon la revendication 17, **caractérisée en ce que** le support luminescent est conçu sous la forme d'une plaque luminescente (15) présentant une face supérieure (65) et une face inférieure (66), la face supérieure possédant un revêtement différent de celui de la face inférieure.

**19.** Cassette radiographique selon la revendication 17 ou 18, **caractérisée en ce qu'**elle présente un dispositif d'entraînement linéaire (73), notamment un moteur électrique linéaire, destiné à mouvoir le dispositif (10, 60) selon l'une des revendications 1 à 16 sur le support luminescent (15).

**20.** Cassette radiographique selon l'une des revendications 17 à 19, **caractérisée en ce qu'**elle présente un moyen d'effacement (74) destiné à effacer l'information enregistrée sur le support luminescent (15).

**21.** Cassette radiographique selon la revendication 19 et la revendication 20, **caractérisée en ce que** le moyen d'effacement (74) est agencé de telle façon qu'il peut être déplacé par le dispositif d'entraînement linéaire (73) sur le support luminescent (15).

Fig.1

Fig.2

EP 1 424 569 B1

P500  P501  P502  · · ·

Z80 →
| 91 | 92 | 93 |
Z81 →
| 101 | 102 | 103 |
Z82 →
| 111 | 112 | 113 |
Z83 →
| 121 | 122 | 123 |
·
·
·

AZ

AP

15

A

B

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0777148 A1
- US 4816679 A
- DE 19506809 A1